# EUROPEAN PATENT SPECIFICATION

(11) **EP 3 553 439 B1**
(45) Date of publication and mention of the grant of the patent: **29.07.2020**
(21) Application number: 17881008.1
(22) Date of filing: 23.05.2017
(51) Int. Cl.: F27B 7/24, F16J 15/3232

(54) **ROTATING SEAL MECHANISM**
DREHDICHTUNGSMECHANISMUS
MÉCANISME D'ÉTANCHÉITÉ ROTATIF

(30) Priority: 12.12.2016 CN 201611138458
(43) Date of publication of application: 16.10.2019
(73) Proprietor: Zhu, Shuhong, Nanyang, Henan 474550 (CN)
(72) Inventor: Zhu, Shuhong, Nanyang, Henan 474550 (CN)
(74) Representative: Lavoix
(86) International application number: PCT/CN2017/085424
(87) International publication number: WO 2018/107662

(56) References cited:
- CN-A- 102 889 783
- CN-A- 102 889 783
- CN-A- 103 115 364
- CN-A- 105 910 427
- CN-A- 106 482 506
- CN-U- 204 495 045
- JP-A- 2002 005 300
- JP-A- 2003 075 069
- JP-A- 2014 040 987
- JP-B2- 4 256 084
- JP-B2- 4 256 084
- US-A- 5 571 269

## Description

### Technical Field

The present disclosure relates to the technical field of rotating seal mechanisms, and in particular to the technical field of sealing mechanisms for rotary kilns.

### Background Art

Rotary kilns are widely used in the fields of building materials, metallurgy, chemical industry, environmental protection and the like, and can be divided into cement kilns, metallurgical chemical kilns, and lime kilns depending on different materials to be processed. The cement kiln is mainly used for calcining cement clinker; the metallurgical chemical kiln is used for magnetizing roasting of lean iron ore in iron and steel plants in metallurgical industry, oxidizing roasting of chromite and awaruite, roasting of high alumina bauxite in refractory material plants and roasting of clinker and aluminum hydroxide in aluminum plants, roasting of chrome ore sand and chrome ore powder in chemical plants, etc.; the lime kiln is used for roasting active lime and light-burnt dolomite for use in iron and steel plants. The above-mentioned rotary kilns have a common feature that a process of heating materials is performed in such a manner that external fuel gas or a fuel such as coal or heavy oil contained in the materials themselves is combusted with air in the rotary kiln, the materials are directly heated, and some of the materials that need to be reduced are reduced by controlling the amount of air in the rotary kiln so that complete combustion does not take place in the rotary kiln so as to produce a reducing atmosphere such as carbon monoxide, but the concentration of carbon monoxide is relatively low, and leakage of air into the kiln or leakage of the reducing gas with relatively low concentration from the kiln has no major hazard to the safety of the rotary kiln. Therefore, although these rotary kilns also need to be sealed, there is great difficulty in truly sealing the rotary kiln due to a large displacement of the rotary kiln and high temperature in the kiln, and the rotary kiln is usually sealed by fish scale (flap) type seal, semi-flexible seal (it is also a form of fish scale type seal, except that this semi-flexible seal is equivalent to two times of fish scale type seals, with a layer of carbon-silicon-nickel flexible composite plate added therebetween, which allows much less gas leakage than a single-layer fish scale type seal), labyrinth seal, packing seal, or the like. The above sealing methods can only be used to prevent leakage of a large amount of gas, do not have an ideal sealing effect, and can hardly guarantee that there is no pollution to the atmosphere, because dust and gases readily escape from the kiln body. In addition, external air inevitably enters the kiln, which causes an impure internal chemical reaction environment, affecting the effect of the reaction. Moreover, not only the rotary kiln cannot be completely sealed, but also the service life of the sealing mechanism is often greatly reduced due to the center displacement (bouncing movement) of the rotating body during the process of use. Further, coal gas produced by coal or biomass pyrolysis contains a high amount of methane, carbon monoxide and hydrogen, and has a high calorific value. At the sealing location, either entry of air into the rotary kiln or leakage of the coal gas from the rotary kiln causes a great security threat to the pyrolysis equipment manufactured with high cost and easily affects the effect of the reaction, which requires a safe, reliable and effective non-leakage rotating seal.

Chinese Patent Publication (Announcement) No. CN102741596A filed by Eesti Energia Olitoostus As, entitled "Rotary Kiln End Seal Assembly, discloses an end sealing assembly of a rotary kiln and an improvement of its end sealing (16); whereas the first and second casing rings (2, 3) used in the end sealing compose of at least four segments, and onto both sides of the rotating casing ring (1) a rectangularly cut hollow (81, 91) for lubricants has been formed; and on the side that is assembled with the rotating casing ring of the first and second casing ring (2, 3), accordingly, a hollow (82, 93) has been formed for lubricants, which in the making face the corresponding hollow (81, 91) of the casing ring, forming lubricant channels (8, 9) between the casing ring (1) of the end sealing assembly and the first and second casing ring (2, 3). It is only a good solution to the problem of lubrication, but has no way to settle the displacement of the rotating body.

Chinese Patent Publication No. CN 104515382 A filed by Shenyang Aluminum & Magnesium Engineering & Research Institute Co., Ltd., discloses a sealing device for a rotary kiln, which is suitable for sealing gas flow and dust for various rotary kilns. The sealing device sleeves a rotary kiln shell; a sealing structure is formed between a friction block and the rotary kiln shell; one end of the sealing device is connected to a kiln head cover or a kiln tail cover through a connecting plate; the sealing device comprises a connecting plate, a fixing plate, a front wedge block, a rear wedge block, a slide wheel frame, a slide wheel, a steel wire rope, a counter weight, and a friction block. The invented sealing device has the characteristics of a good sealing effect, a reliable structure, convenience in maintenance, and capabilities of preventing material leakage, protecting the environment and saving the energy resources, and solves the problems in the prior art such as invalid sealing of the kiln head or kiln tail due to axial shifting and radial displacement of the shell under heat, however there is a gap between the friction block and the rotary kiln shell and between the friction block and the friction block during movement, the sealing can still only guarantee that there is no large leakage, and the sealing between rigid parts still cannot guarantee no leakage of gas. JP2014040987A discloses a seal structure of rotary kilns and a rotary kiln, US5571269A discloses a rotary seal assembly for rotary drum, JP4256084B2 discloses a seal mechanism for a rotating body, JP2003075069A discloses a seal structure for a rotary kiln, CN102889783A discloses a sealing device and a rotary kiln, CN105910427A discloses a sealing device for combined type rotary kilns, and JP2002005300A discloses a seal device for a rotating body.

### Summary

The present disclosure is directed to the deficiencies in the prior art to provide a rotating seal mechanism to completely solve the technical problem that the rotating seal is affected by the center displacement of the rotating body.

A rotating seal mechanism for a rotary kiln is disposed between a fixed body and a rotating body and comprises: a sealing assembly (connector) disposed on a circumference of the rotating body and rotatably connected to the rotating body, wherein the sealing assembly comprises a sealing frame body, and the sealing frame body is provided therein with a sealing ring, a positioning ring for a sealing ring, and a gland for a sealing ring; a flexible connecting body (connector) connected with the sealing assembly and the fixed body; and a limiting cooperating component disposed on the sealing assembly.

A follower (servo) support components are disposed on the sealing assembly, wherein the follower support components define the coaxiality between the sealing assembly and the rotating body, the follower support components are supporting rollers, supporting rings or supporting blocks respectively on one side of the sealing frame body and one side of the gland for the sealing ring, wherein during rotation of the rotating body, the sealing assembly moves relative to the rotating body to be radially displaced up and down and leftwards and rightwards with the rotating body, and during the rotation of the rotating body, the sealing member is subjected to friction from the rotating body, a force applied in a circumferential direction is unloaded onto the flexible connecting body, and a position of the sealing assembly in the circumferential direction changes.

The sealing assembly is provided with a lubricating grease channel.

A part of the fixed body is a shell (cylindrical body), wherein a diameter dimension of the shell is between a diameter dimension of the fixed body and a diameter dimension of the rotating body, the shell may be a part of the fixed body, and a dust-blocking heat insulation wall of labyrinth type is disposed between the shell and the rotating body.

A part of the fixed body is a shell (cylindrical body), wherein a diameter dimension of the shell is between a diameter dimension of the fixed body and a diameter dimension of the rotating body, the shell may be a part of the fixed body, and a temperature-lowering box is disposed between the shell and the rotating body.

A tyre is disposed between the sealing assembly and the rotating body, wherein a ring plate is disposed between the tyre and the rotating body on a side close to the flexible body and the ring plate is welded and sealed.

A spiral blade is disposed between the rotating body and the tyre.

The present disclosure is directed to the problems of untight sealing, poor sealing effect, and short service life of the sealing component caused by the center displacement of the rotating body that easily occur in the rotating seal, particularly in the rotating seal in medium and large-sized equipment, and the rotating seal between the rotating body and the fixed body is creatively decomposed, that is, the rotating seal is decomposed into a rotating seal between the rotating body and the sealing assembly, and a flexible displacement seal between the sealing assembly and the fixed body. In this way, the original complicated seal, in which rotation, displacement, twisting, and slipping are combined together, is converted into a single rotating seal and a flexible seal in which multiple movements such as displacement, twisting, and slipping are converted into a flexible seal for absorbing flexible changes of the displacement, twisting and slipping; and both the seals can achieve complete sealing.

A sealing assembly rotatably connected to the rotating body is disposed on the circumference of the rotating body, wherein the sealing assembly is brought into contact with the rotating body, and a good rotating seal between the sealing assembly and the rotating body is achieved while ensuring the contact between the sealing assembly and the rotating body. The sealing assembly is connected to the fixed body via a flexible connecting body. The flexible connecting body has its one end connected to the sealing assembly, and the other end connected to the fixed body. During the rotation of the rotating body, the sealing assembly moves relative to the rotating body, but is radially displaced up and down and leftwards and rightwards with the rotating body during its relative movement. The sealing assembly is connected to the fixed body via the flexible connecting body during the displacement. The flexible connecting body itself is soft and can undergo various deformations, in particular a deformation in a radial direction, thus a change in position of the sealing assembly will not be transmitted to the fixed body, so that the immovability of the fixed body and the displacement of the sealing assembly can be enabled to coexist for a long time without affecting each other. Frequent dynamic changes in position of the sealing assembly between an ideal axis and the actual dynamic axis are automatically absorbed by the flexible connecting body by its own flexibility. The flexible connecting body can ensure no mutual positional interference between the fixed body and the sealing assembly, but also can achieve reliable sealing between the sealing assembly and the fixed body.

During the design of the rotating seal, the ideas of those skilled in the art would be all focused on how to make the center displacement of the rotating body during rotation process be smaller, or preferably within a very small range, to adapt to the deformation of the sealing member between the fixed body and the rotating body, that is to say, the reduction of the displacement of the rotating body from various aspects would be a technical thinking direction of those skilled in the art during the design of the rotating seal, and this would be the most important direction for those skilled in the art. When the center displacement of the rotating body during the rotation fails to reach an ideal dimension, those skilled in the art would generally try to increase the deformation dimension and deformability of the sealing member, so that the deformation dimension of the sealing member becomes larger to be adapted to the magnitude of the center displacement of rotation of the rotating body to reduce gas leakage as much as possible. More importantly, in the concept of design of the rotating seal, no matter for large equipment or for small equipment, more compactness and smaller spacing between the rotating body and the fixed body is the focus and foothold for achieving all the sealing operations, thus there is a tendency to use more precise manufacturing materials and more advanced design processes to better reduce the center displacement of the rotating body and increase the deformation dimension of the sealing member. It is absolutely inconceivable to use a component that is completely irrelevant to the rotating seal to allow and compensate for the center displacement of the rotating body. That is to say, the decomposition of the rotating seal between the rotating body and the fixed body in the present disclosure, i.e., the decomposition of the rotating seal into a rotating seal between the rotating body and the sealing assembly and a flexible displacement seal between the sealing assembly and the fixed body, is a design direction completely different from conventional designs performed by those skilled in the art. Those skilled in the art would have no reason to get a technical teaching that the rotating seal should be connected with a flexible connecting body for solving the problem of rotating seal between the rotating body and the fixed body during the displacement of the rotating body.

In addition, particularly surprisingly, during the rotation of the rotating body, the flexible connecting body can not only adapt to the problem of radial displacement of the sealing assembly during the center displacement of the rotating body, so that the sealing assembly displaces together with the rotating body in the radial direction to ensure the coaxiality between the sealing assembly and the rotating body and ensure that a pressure and deformation applied to the sealing member in the sealing assembly are within a normal range, thereby improving the sealing effect and the service life of the sealing member. Meanwhile, during the rotation of the rotating body, the sealing member in the sealing assembly is subjected to friction from the rotating body, a force applied in the circumferential direction is unloaded onto the flexible body, and the position of the sealing assembly in the circumferential direction will also change. Depending on the characteristics of the flexible connecting body itself, the sealing assembly may also be allowed to undergo a certain twisting change in the circumferential position. This frictional rotary force is finally unloaded on the fixed body via the flexible body to cause a twisting reaction force. The reaction force in turn limits the rotation of the sealing assembly within a small range via the flexible body. Moreover, after the sealing assembly is rotated in the circumferential direction, it will inevitably drive a distortion of the flexible connecting body to a certain extent, which distortion will change a tensile force applied to the flexible connecting body, which force in turn limits the continued rotation of the sealing assembly in the circumferential direction, thus the flexible connecting body is used in a combination of radial displacement and circumferential rotation of the sealing assembly to allow the radial displacement of the sealing assembly and limits the circumferential rotation, and also achieves the seal between the sealing assembly and the fixed body, and is a key component in the dynamic rotating seal.

More importantly, as a flexible connecting body and a follower support mechanism connected to the fixed body, the sealing assembly, and the rotating body, the flexible connecting body and the follower support mechanism are matched combinations, which correspond to a relatively large center displacement of the rotating body, and a stable spacing between the sealing assembly and the rotating body, a relatively small frictional force, a normal deformation of the sealing member and a relatively good sealing effect, respectively. Only its relatively small frictional force can satisfy the radial change and the circumferential restraint of the sealing assembly by the flexible connecting body. Thus, the present disclosure provides a dynamic overall innovative system, and provides a technical achievement allowing mutual supporting between various components resulting from an innovative idea of rotating seal.

More peculiarly, during the operations of the fixed body and the rotating body with a center displacement, the rotating seal mechanism of the present disclosure does not actually restrict the center displacement of the rotating body, and the center displacement of the rotating body is compensated by the flexible connecting body without affecting the sealing, so that transmission of the displacement to the fixed body is stopped, the sealing assembly is allowed to be displaced centrally with the rotating body, and the force of center displacement and the force of circumferential friction are effectively eliminated by the flexible connecting body. Upon operation for a period of time, the magnitude of the center displacement of the rotating boy is unexpectedly gradually reduced, and slowly reaches a more controllable range. Moreover, the speed is very fast, and even twice or more than twice as fast as a rotating body that is not liberated by the sealing component. Although the shape of a large or medium-sized kiln body will also be slowly deformed locally during rotation to become a shape closer to an ideal rotating body, which is more advantageous to fulfill the rotation of the rotating body, but such speed closer to that of the rotating body is indeed unexpected. The structure of the large or medium-sized rotating body is generally in the form of a metal structure, has a large volume, carries many materials therein, and is accompanied by a high-temperature chemical reaction process, thus it is unexpected that the large or medium-sized rotating body or rotary equipment rotating at high temperature with high load undergoes such a rapid deformation of the cylindrical shape during rotation, which is more advantageous to the rotation, results in a smaller center displacement, and is also more advantageous to sealing.

By disposing a circumferential (position) limiting cooperating component on the sealing assembly and disposing a (position) limiting component on the fixed body, the sealing assembly is displaced radially with the rotating body along a center line without moving circumferentially. The circumferential limiting component may be in various forms, each of which can enable the sealing assembly to be circumferentially immovable during the radial floating. The circumferential limiting component limits the circumferential direction of the sealing assembly. A rotational friction force generated by the sealing assembly during the rotation of the rotating body is directly unloaded on the fixed body, thereby avoiding the frictional resistance generated by the sealing assembly to be transmitted to the flexible connecting body, so that the flexible connecting body has a longer service life. The flexible connecting body may be adopted as a rubber product with a high flexibility, which can effectively guarantee deformation, oscillation (swing), and play of the flexible connecting body with the rotation of the rotary kiln. The complicated movement of the flexible connecting body compensates for the positional change between the fixed body and the rotating body, and solves the problem that the sealing assembly may generate a circumferential twisting force on the flexible connecting body during the rotating seal, so that the force applied to the flexible body is reduced as much as possible, and at the same time many problems generated in the rotating seal caused by the displacement of the rotating body are well solved. The circumferential limiting component is disposed on the fixed body, or may also be disposed on another fixed body, or even disposed in the flexible connecting body, as long as it can apply an action of force to the sealing assembly to prevent the circumferential movement thereof.

In the present disclosure, a follower support mechanism is disposed on the sealing assembly. The coaxiality between the sealing assembly and the rotating body is defined by the follower support mechanism, so that there should be no large deviation between two rotation centers of the sealing member in the sealing assembly and the rotating body, thereby guaranteeing that the center of the sealing ring in the sealing assembly has no large deviation from the rotation center of the rotating body, whereby the distance between the sealing assembly and the periphery of the rotating body is more uniform, the normal sealing and gap compensating capability of the sealing ring is guaranteed. A proper gap is guaranteed between the follower support mechanism and the rotating body so that no sticking phenomenon occurs at a certain contact location, and at the same time the gap between the follower support mechanism and the rotating body should not be too large so as to ensure sealing. if there is no follower support mechanism, or there is a too large gap between the follower support mechanism and the rotating body, the sealing assembly cannot be guaranteed to be coaxial with the rotating body, the gap between the sealing assembly and the periphery of the rotating body may become severely uneven, the center of the sealing ring of the sealing assembly will be deviated too much from the center of the rotating body, and the sealing by the sealing ring may result in two phenomena at the same time. On the one hand, at a location where the gap is too small, the sealing ring is severely deformed, and even the lip edge of the sealing ring is cracked by being pressed and is severely worn. On the other hand, at a location where the gap is too large, the gap cannot be filled by the maximum compensation capability of the sealing ring, which causes gas leakage at the location. The follower support mechanism may be implemented in various forms. A sliding or rolling mechanism is disposed on both sides of or in the middle of the sealing assembly, so that it is always guaranteed that there is always a circumferential relative movement between the sealing assembly and the rotating body, and the coaxiality between the sealing assembly and the rotating body is always ensured to be within a certain range. Because of the presence of the follower support mechanism, the sealing assembly is always displaced centrally with the rotating body in the radial direction of the rotating body. During the center displacement therewith, the coaxiality between the sealing assembly and the rotating body is within a certain range, their relative movements are not affected, and the compensation capability of the sealing ring completely satisfies the need for sealing the gap so as to achieve a reliable sealing between them.

The sealing assembly comprises a sealing frame body, wherein the sealing frame body is provided therein with a sealing ring, a positioning ring for a sealing ring and a gland for a sealing ring.

A flange is disposed between the fixed body and the flexible connecting body to facilitate installation of the equipment.

A dust-blocking component is disposed in order to reduce entry of dust into a location between the sealing assembly and the rotating body, so as to reduce the wear of the sealing ring, and additionally can serve a good heat insulation function, and can reduce thermal radiation of the flexible connecting body and the sealing ring by the high temperature in the kiln to protect the flexible connecting body and the sealing ring. Preferably, a temperature-lowering device is disposed between the shell and the rotating body to cool the gas entering the sealing zone, which is more advantageous to reducing the requirements for temperature resistance of materials of the flexible connecting body and the sealing ring, and improving the service life of the flexible connecting body and the sealing ring. More preferably, on the outer side of the cooling device, that is, at a position away from the fixed body and close to the sealing ring, a blocking ring is fixedly connected to the outer wall of the kiln head, it is appropriate that no friction will be generated between the blocking ring and the flange of the shell, and the blocking ring and the temperature-lowering device jointly serve for blocking dust and preventing thermal radiation.

A tyre is disposed between the sealing assembly and the rotating body. Due to sliding friction between the sealing assembly and the rotating body, a portion of the rotating body that is brought into contact with the sealing assembly needs to be smoothed to reduce the friction and improve the sealing effect of the sealing assembly on the rotating body; however, there is great difficulty in local grinding and smoothing processes of a large-sized rotating body. In contrast, use of a tyre is equivalent to a reduction of a dimension to be processed, the dimension of the tyre is smaller in volume than that of the rotating body, facilitating the processing of its surface and also facilitating installation, inspection and repair, and replacement, and at the same time the tyre can be used to distance the sealing assembly from the rotating body to reduce heat transmission from the rotating body outward to the sealing assembly so as to the improve the sealing performance and increase the service life of the sealing assembly. A ring plate is disposed between the tyre and the rotating body at one end where there is the flexible body and the ring plate is welded and sealed, the purpose of which is to guarantee that between the tyre and the rotating body there is no problem of gas leakage with inside the rotating body.

The sealing ring, the positioning ring for the sealing ring and the sealing frame body of the sealing assembly are provided with a lubricating grease channel, which can conveniently achieve the injection of lubricating grease into the sealing ring to reduce the friction between the sealing ring and the tyre fixedly connected to the kiln head and prolong the service life of the sealing ring. The sealing ring is a Y-shaped or J-shaped sealing ring, the Y-shaped or J-shaped sealing ring has the characteristic of large amount of dimension compensation, the compensation amount thereof mainly depends on a lip ring of the Y-shaped or J-shaped sealing ring, the lip ring has a relatively large elastic compensation capability, and there is no gap or aperture between the rubber and the tyre fixedly connected to the rotating body, and thus the sealing effect thereof is much higher than the sealing effect of a fish scale type seal or the like.

### Brief Description of Drawings

The technical solutions of the present disclosure are further described below in connection with the accompanying drawings.
FIG. 1 is a schematic structural view of a first embodiment of the present disclosure;
FIG. 2 is a schematic structural view of a sealing assembly in the first embodiment;
FIG. 3 is a schematic structural view of a sealing assembly in a second embodiment;
FIG. 4 is a schematic structural view of a third embodiment;
FIG. 5 is an enlarged view of a sealing assembly, a limiting component, and a limiting cooperating component in the third embodiment;
FIG. 6 is a schematic structural view of a fourth embodiment;
FIG. 7 is a schematic structural view of a fifth embodiment;
FIG. 8 is a schematic structural view of a sixth embodiment;
FIG. 9 is a schematic structural view of a seventh embodiment;
FIG. 10 is a schematic structural view of an eighth embodiment; and
FIG. 11 is a schematic structural view of a ninth embodiment.

### Detailed Description of Embodiments

### First Embodiment:

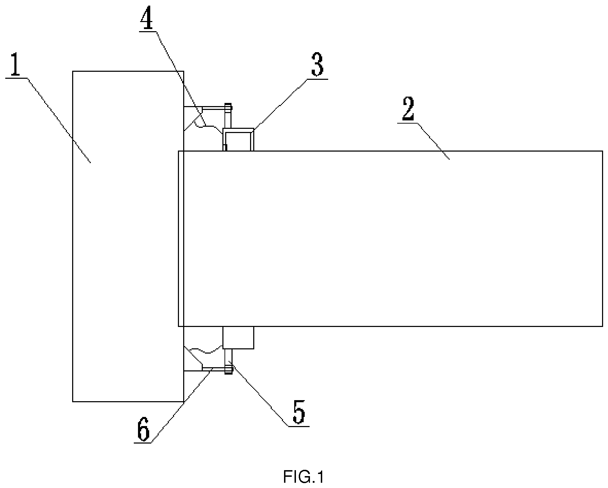

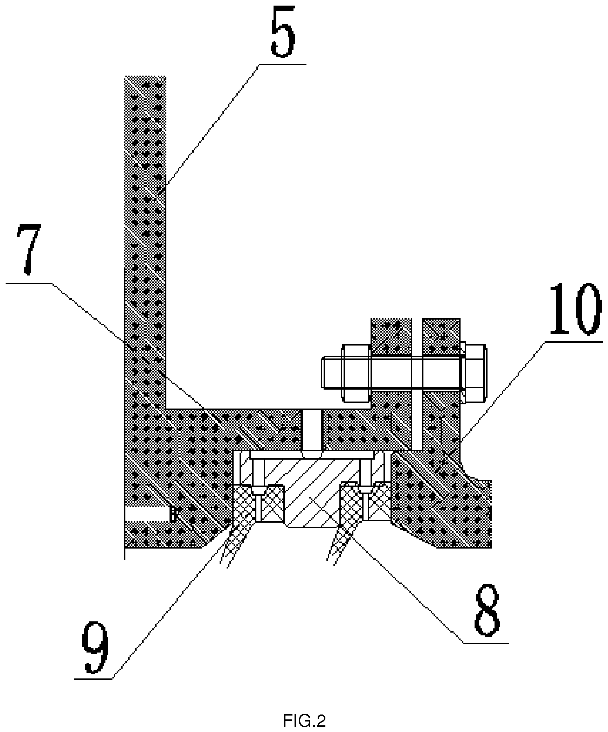

As shown in FIG. 1 and FIG. 2, a rotating seal mechanism is disposed between a fixed body 1 and a rotating body 2, wherein the diameter of the fixed body is larger than the diameter of the rotating body, and the fixed body and the rotating body can be regarded as a kiln head cover of a rotary kiln and a kiln body of the rotary kiln. The rotating seal mechanism comprises: a sealing assembly 3 disposed on an outer circumference of the rotating body 2 and rotatably connected to the rotating body 2, and a flexible connecting body 4 connected with the sealing assembly 3 and the fixed body 1; and the flexible connecting body 4 may be a high-temperature resistant rubber product or other products with good dimension compensation performance, which serves for reliable sealing and for compensation for a displacement. The sealing assembly 3 comprises a sealing frame body 7. The sealing frame body 7 is provided therein with a sealing ring 9, a positioning ring 8 for the sealing ring, and a gland 10 for the sealing ring. The sealing ring 9 is a J-shaped sealing ring, and a sealing lip of the J-shaped sealing ring is designed to have a large width in a diameter direction, and may have a width dimension of up to 10 to 20 mm, and may have a compensation capability of up to 5 to 10 mm on one side. Optimizedly, the rubber sealing ring is made of silicone rubber or fluororubber or hydrogenated nitrile rubber (HNBR), and is resistant to a temperature of up to 250 °C. A circumferential limiting component includes a limiting cooperating component 5 disposed on the sealing frame body 7, and the limiting cooperating component 5 is a limiting orifice plate or a positioning stopper block or a positioning baffle; a limiting component 6 disposed on the fixed body 1 for restricting a circumferential rotation of the sealing assembly 3 is a supporting rod, one end of the limiting component 6 is fixed to the fixed body 1, and the other end of the limiting component 6 extends into the limiting orifice plate 5 which is the limiting cooperating component. The limiting orifice plate 5 has a certain space along the radial and circumferential directions of the rotating body, so that the limiting component 6 can be moved freely in the limiting orifice plate 5 in the radial direction of the rotating body during the rotation of the rotating body, whereas the space in the limiting orifice plate 5 along the circumferential direction of the rotating body is limited so as to only meet the requirement that the limiting component 6 and the limiting cooperating component 5 are not fully fixed, while preventing the limiting orifice plate 5 from moving in the circumferential direction, such that the sealing assembly 3 can be rotated radially with the rotating body 2, and displaced leftwards and rightwards and up and down along the center line without being rotated circumferentially.

### Second Embodiment:

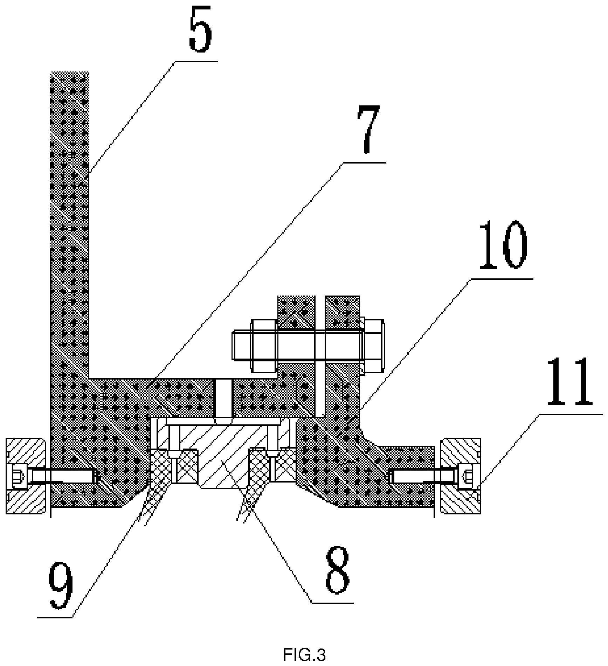

As shown in FIG. 1 and FIG. 3, the second embodiment is different from the first embodiment only in that the sealing assembly 3 is provided with a follower support component 11 on both sides of the sealing frame body 7 and the gland 10 for the sealing ring. The follower support component 11 is a supporting roller, which supporting roller is made from a wear-resistant material and can roll on the outer circumference of the rotating body to ensure the requirement for coaxiality between the sealing assembly 3 and the rotating body 2 so as not to affect the sealing. A certain gap is provided between the follower support roller and the rotating body. This is intended to avoid that the rotating body and the follower support roller get stuck and cannot perform relative movement due to an absence of gap at a certain movement location because of a slight ellipse of the rotating body and a slight ellipse or deformation of the follower support roller, and on the other hand, this is intended to prevent a too large gap that causes a larger aperture between the sealing ring as well as the follower support roller and the rotating body and results in a phenomenon of gas leakage from a void, or to prevent a too small local gap that results in a phenomenon of cracking of the lip edge of the sealing ring upon being pressed.

### Third Embodiment:

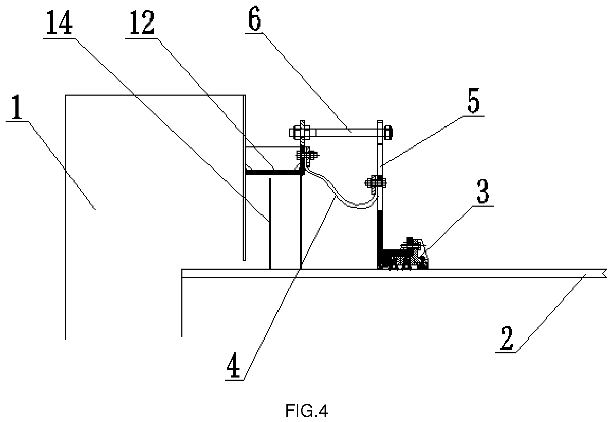

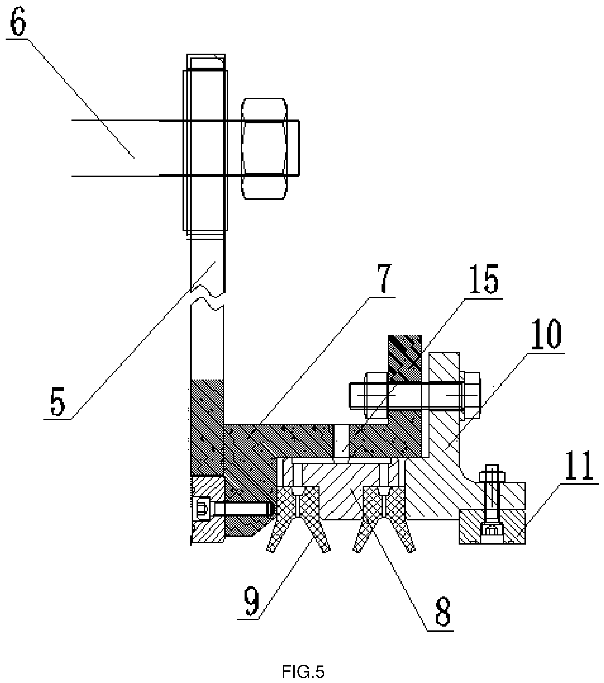

As shown in FIG. 4 and FIG. 5, a rotating seal mechanism is disposed between a fixed body 1 and a rotating body 2, wherein the fixed body 1 is a kiln head cover of a rotary kiln, and the rotating body 2 is a kiln body of the rotary kiln. The rotating seal mechanism comprises: a sealing assembly 3 disposed on an outer circumference of the rotating body 2 and rotatably connected to the rotating body 2; and a flexible connecting body 4 connected with the sealing assembly 3 and the fixed body 1; and the flexible connecting body 4 may be a high-temperature resistant rubber product or other products with good dimension compensation performance, which serves for compensation for a displacement and for reliable sealing. The sealing assembly 3 comprises a sealing frame body 7. The sealing frame body 7 is provided therein with a sealing ring 9, a positioning ring 8 for the sealing ring, and a gland 10 for a sealing ring. The sealing ring 9 is a Y-shaped sealing ring, and a sealing lip of the Y-shaped sealing ring is designed to have a large width in a diameter direction, and may have a width dimension of up to 10 to 20 mm, and may have a compensation capability of up to 5 to 10 mm on one side. Optimizedly, the rubber sealing ring is made of silicone rubber or fluororubber or hydrogenated nitrile rubber (HNBR), and is resistant to a temperature of up to 250 °C. The sealing assembly 3 is provided with a follower support component 11 on both sides of the sealing frame body 7 and the gland 10 for the sealing ring, wherein the follower support component 11 is a supporting ring or a supporting block, which supporting ring or supporting block is made of a wear-resistant material and can slide on the outer circumference of the rotating body. A limiting orifice plate 5 which is a limiting cooperating component is disposed on the sealing assembly 3, and a support frame 6 which is a limiting component for restricting a circumferential rotation of the sealing assembly 3 is disposed on the fixed body 1. The fixed body 1 is connected to the flexible connecting body 4 by a flange, and the other end of the flexible connecting body 4 is connected to the sealing frame body 7 by the flange. The limiting orifice plate 5 which is a limiting cooperating component is disposed on the flange of the sealing frame body. The support frame 6 which is a limiting component has one end disposed on the kiln head cover, and the other end extending into an end of the limiting cooperating component 5 to block the rotation of the limiting cooperating component 5. The limiting component 6 does not restrict the radial direction of the rotating body, so that the sealing assembly 3 is displaced radially along the center line with the rotating body 2 without moving circumferentially. A shell 12 is disposed between the fixed body and the flange connected thereto, wherein the diameter dimension of the shell 12 is between the diameter dimension of the fixed body 1 and the diameter dimension of the rotating body 2, this shell 12 is a part of the fixed body 1, and a dust-blocking heat insulation wall of labyrinth type 14 is disposed between the shell 12 and the rotating body 2. The dust-blocking heat insulation wall of labyrinth type 14 can prevent dust generated in the kiln from entering the sealing assembly and causing damage to the sealing assembly. The sealing assembly is provided with a lubricating grease channel 15.

### Fourth Embodiment:

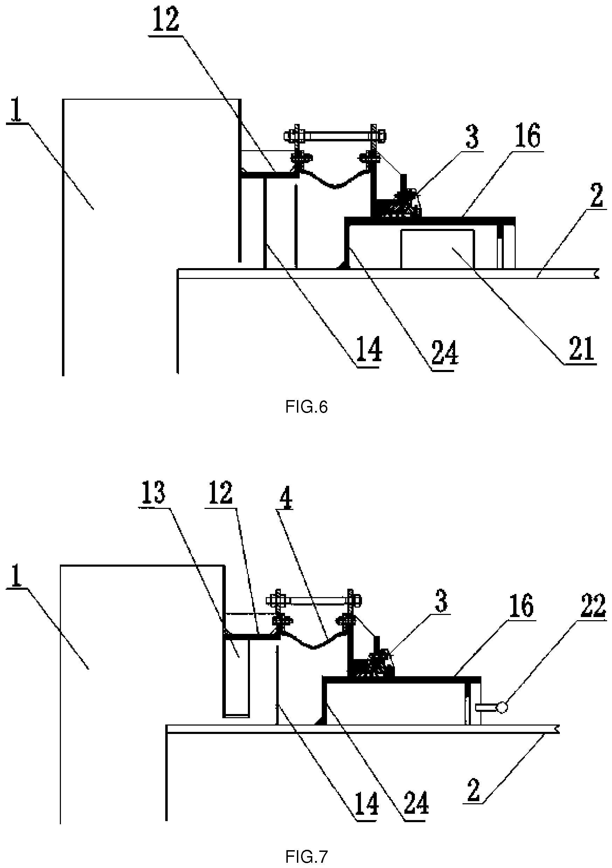

As shown in FIG. 6, compared with the third embodiment, in the fourth embodiment, a tyre 16 is disposed between the sealing assembly 3 and the rotating body 2, a first purpose of which is to meet the need for reducing a frictional force, a second purpose of which is to meet the need for sealing, a third purpose of which is to meet the need for convenient processing, and a fourth purpose of which is to meet the need for convenient installation. That is, a smooth outer surface of the tyre can reduce the frictional force while improving the sealing performance between the sealing assembly and the tyre 16; and the contact portion is smoothed to reduce the friction and improve the sealing effect. There is great difficulty in a local grinding of a large-sized ultralong rotating body, and it is more difficult to correct the ultralong rotating body during installation, therefore the series of problems can be solved by the provision of the tyre. At the same time, the tyre 16 can be used to distance the sealing assembly 3 from the rotating body 2 to reduce heat transmission from the rotary kiln to the sealing location. The size of the tyre is smaller in volume than that of the rotating body, facilitating the processing of its surface. A ring plate 24 is disposed between the tyre 16 and the rotating body 2 at one end where there is the flexible body 4 and the ring plate is welded and sealed, the purpose of which is to guarantee that between the tyre and the rotating body there is no problem of gas leakage with inside the rotating body.

In addition, a spiral blade 21 is disposed between the tyre 16 and the rotary kiln 2, so that the natural air cooling is forced along with the rotation of the rotary kiln to lower the temperature of the tyre 16 and avoid affecting the sealing and the service life of the sealing assembly due to a too high temperature of the surface of the tyre.

### Fifth Embodiment:

As shown in FIG. 7, compared with the third embodiment and the fourth embodiment, in the fifth embodiment, not only a tyre 16 is disposed between the rotating body 2 and the sealing assembly 3, but also a ring plate 24 is disposed between the tyre 16 and the rotating body 2 at one end where there is the flexible body 4 and the ring plate is welded and sealed, the purpose of which is to guarantee that between the tyre and the rotating body there is no problem of gas leakage with inside the rotating body.

In addition, a cooling nozzle 22 is disposed outside the tyre to spray water onto the aperture between the tyre and the rotary kiln for cooling. The fixed body 1 is a kiln head cover, a shell is disposed between the fixed body 1 and the flange connected thereto, and a temperature-lowering box 13 and a dust-blocking heat insulation wall 14 are provided as components between the shell and the rotating body 2. The function of providing the temperature-lowering box 13 is to effectively lower the high temperature in the rotary kiln at the temperature-lowering box to greatly reduce the heat transmission of radiant heat in the kiln to the flexible connecting body 4 and the sealing assembly 3, so that the flexible connecting body 4 and the sealing assembly 3 can have more extended service life; and the provision of the temperature-lowering box 13 and the dust-blocking wall 14 also serves for blocking dust.

### Sixth Embodiment:

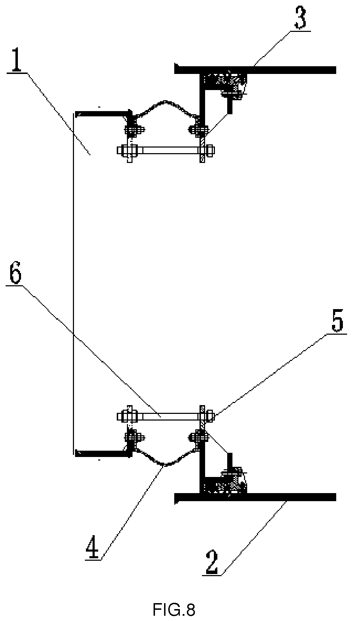

As shown in FIG. 8, in the case where the diameter of the fixed body 1 is smaller than the diameter of the rotating body 2, a rotating seal mechanism is disposed between the fixed body 1 and the rotating body 2 and comprises: a sealing assembly 3 disposed on an inner circumference of the rotating body 2 and rotatably connected to the rotating body 2; and a flexible connecting body 4 connected with the sealing assembly 3 and the fixed body 1; and the flexible connecting body 4 may be a high-temperature resistant rubber product or other products with good dimension compensation performance, which serves for compensation for a displacement and for reliable sealing. The sealing assembly 3 comprises a sealing frame body. The sealing frame body is provided therein with a sealing ring, a positioning ring for a sealing ring, and a gland for a sealing ring. The sealing ring 9 is a Y-shaped sealing ring, wherein a sealing lip of the Y-shaped sealing ring is designed to have a large width in a diameter direction, and may have a width dimension of up to 10 to 20 mm, and may have a compensation capability of up to 5 to 10 mm on one side. Optimizedly, the rubber sealing ring is made of silicone rubber or fluororubber or hydrogenated nitrile rubber (HNBR), and is resistant to a temperature of up to 250 °C. The sealing assembly 3 is provided with a follower support component on both sides of the sealing frame body and the gland for the sealing ring, and the follower support component is a supporting ring or a supporting block, which supporting ring or supporting block is made of a wear-resistant material and can slide or roll on the inner circumference of the rotating body. A limiting cooperating component 5 is disposed on the sealing assembly 3, and a limiting component 6 for restricting a circumferential rotation of the sealing assembly 3 is disposed on the fixed body 1. The limiting component 6 has one end fixed to the fixed body, and the other end extending into an end of the limiting cooperating component 5. Since the limiting component 6 and the limiting cooperating component 5 are not fixedly connected to each other, the limiting component 6 does not restrict the radial movement of the cooperating component 5 with the rotating body, while only restricts the circumferential movement of the cooperating component 5 with the rotating body. Since the limiting cooperating component 5 is disposed on the sealing assembly 3, the sealing assembly 3 is displaced radially along the center line with the rotating body 2 without moving circumferentially. A dust-blocking component is disposed between the inner circumference of the flange and the rotating body, so that dust or gas generated in the kiln body can be prevented from escaping from the connecting component to protect the environment from pollution.

### Seventh Embodiment:

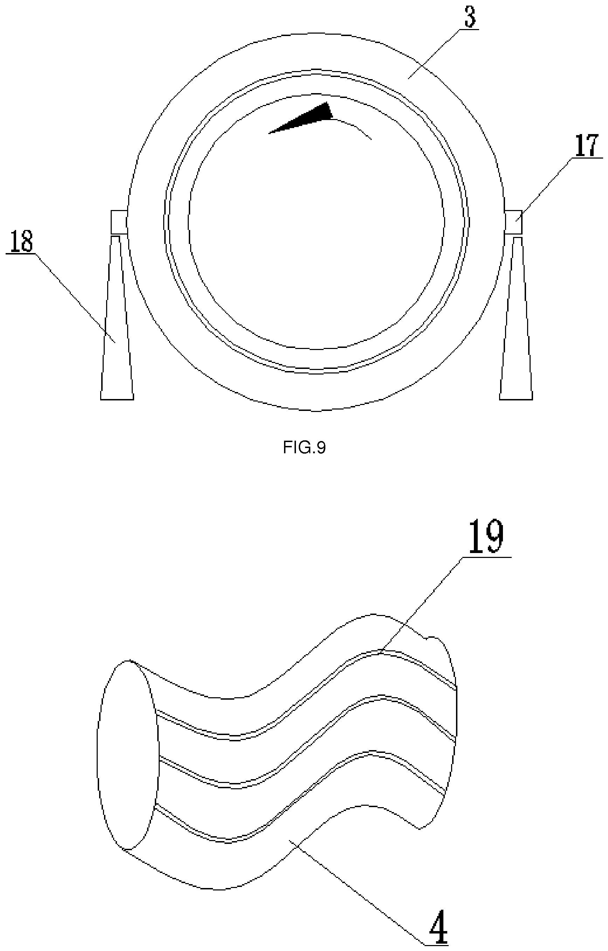

As shown in FIG. 9, the circumferential limiting component is disposed outside the fixed body and the rotating body, and can also achieve the function of circumferentially limiting the sealing assembly. For example, a stopper block 17 is disposed on the sealing assembly 3, a supporting rod 18 is disposed outside the fixed body externally to the rotating body, for example, on the ground below the sealing assembly, and the cooperation of the supporting rod 18 with the stopper block 17 can block a circumferential rotation of the sealing assembly 3 under the action of a circumferential frictional force, and at the same time can meet a radial movement of the sealing assembly 3 because a proper amount of gap is provided between them. Since the supporting rod is disposed below the sealing assembly, the supporting rod is in a good loaded state, and the supporting rod is firm and reliable.

### Eighth Embodiment:

As shown in FIG. 10, the circumferential limiting component is disposed in the flexible connecting body, and can also achieve the function of circumferentially limiting the sealing assembly. For example, a metal strip 19 with suitable elasticity or other non-metallic material is disposed in the flexible connecting body 4, or a spring is also possible as long as it can enable or substantially enable the sealing assembly connected to one side of the flexible connecting body to be movable radially while substantially being immovable circumferentially.

### Ninth Embodiment:

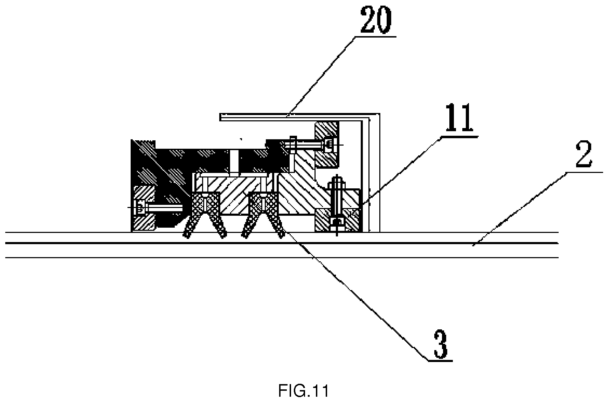

As shown in FIG. 11, the sealing assembly 3 includes not only a follower support component 11 disposed at a location brought into contact with the rotating body or the tyre to guarantee the normal operation of the sealing ring 9, but also a rolling frame 20 disposed on the rotating body or the tyre. The sealing assembly is disposed between the rolling frame 20 and the rotating body 2. The provision of a plurality of rolling components on the sealing assembly 3, in combination with the rolling frame 20, can ensure a suitable and assurable gap between the sealing assembly and the rotating body. Even the material of the flexible body itself has a certain ability to limit the circumferential rotation of the rotating body connected thereto, and the radial direction can be appropriately adjusted, by which the technical solution as claimed in the present disclosure can be implemented.

## Claims

1. A rotating seal mechanism for a rotary kiln, disposed between a fixed body (1) and a rotating body (2) and comprising:
a sealing assembly (3) disposed on a circumference of the rotating body (2) and rotatably connected to the rotating body (2), wherein the sealing assembly (3) comprises a sealing frame body (7), and the sealing frame body (7) is provided therein with a sealing ring (9), a positioning ring (8) for a sealing ring (9), and a gland (10) for a sealing ring (9);
a flexible connecting body (4) connected with the sealing assembly (3) and the fixed body (1);
a limiting cooperating component (5) disposed on the sealing assembly (3); and
follower support components (11) disposed on the sealing assembly (3),
**characterized in that** the follower support components (11) define a coaxiality between the sealing assembly (3) and the rotating body (2), the follower support components (11) are supporting rollers, supporting rings or supporting blocks respectively on one side of the sealing frame body (7) and one side of the gland (10) for the sealing ring, wherein during rotation of the rotating body (2), the sealing assembly (3) moves relative to the rotating body (2) to be radially displaced up and down and leftwards and rightwards with the rotating body (2), and during the rotation of the rotating body (2), the sealing member (3) is subjected to friction from the rotating body (2), a force applied in a circumferential direction is unloaded onto the flexible connecting body (4), and a position of the sealing assembly (3) in the circumferential direction changes.

2. The rotating seal mechanism according to claim 1, wherein the sealing assembly (3) is provided with a lubricating grease channel (15).

3. The rotating seal mechanism according to any one of claims 1 to 2, wherein a part of the fixed body (1) is a shell (12), a diameter dimension of the shell (12) is between a diameter dimension of the fixed body (1) and a diameter dimension of the rotating body (2), and a dust-blocking heat insulation wall (14) of labyrinth type is disposed between the shell (12) and the rotating body (2).

4. The rotating seal mechanism according to any one of claims 1 to 2, wherein a part of the fixed body (1) is a shell (12), a diameter dimension of the shell (12) is between a diameter dimension of the fixed body (1) and a diameter dimension of the rotating body (2), and a temperature-lowering box (13) is disposed between the shell (12) and the rotating body (2).

5. The rotating seal mechanism according to any one of claims 1 to 4, wherein a tyre (16) is disposed between the sealing assembly (3) and the rotating body (2).

6. The rotating seal mechanism according to claim 5, wherein a spiral blade (21) is disposed between the rotating body (2) and the tyre (16).

## Patentansprüche

1. Drehdichtungsmechanismus für einen Drehofen, der zwischen einem festen Körper (1) und einem drehenden Körper (2) angeordnet ist und umfassend:
eine Dichtungseinheit (3), die zwischen einem Umfang des drehenden Körpers (2) angeordnet und drehbar mit dem drehenden Körper (2) verbunden ist, wobei die Dichtungseinheit (3) einen Dichtungsrahmenkörper (7) umfasst und der Dichtungsrahmenkörper (7) darin mit einem Dichtungsring (9), einem Positionierungsring (8) für einen Dichtungsring (9) und einer Stopfbuchse (10) für einen Dichtungsring (9) ausgestattet ist;
einen flexiblen Verbindungskörper (4), der mit der Dichtungseinheit (3) und dem festen Körper (1) verbunden ist;
eine begrenzende zusammenarbeitende Komponente (5), die auf der Dichtungseinheit (3) angeordnet ist; und
Anhänger-Stützkomponenten (11), die auf der Dichtungseinheit (3) angeordnet sind,
**dadurch gekennzeichnet, dass** die Anhänger-Stützkomponenten (11) eine Koaxialität zwischen der Dichtungseinheit (3) und dem drehenden Körper (2) definieren, die Anhänger-Stützkomponenten (11) Stützrollen, Stützringe oder Stützblöcke jeweils auf einer Seite des Dichtungsrahmenkörpers (7) und auf einer Seite der Stopfbuchse (10) für den Dichtungsring sind, wobei sich während der Drehung des drehenden Körpers (2) die Dichtungseinheit (3) mit Bezug auf den drehenden Körper (2) bewegt, um nach oben und unten und nach links und rechts mit dem drehenden Körper (2) radial verschoben zu werden, und während der Drehung des drehenden Körpers (2) das Dichtungselement (3) Reibung vom drehenden Körper (2) unterliegt, eine Kraft, angewendet in einer Umfangsrichtung, auf den flexiblen Verbindungskörper (4) abgeladen wird und sich eine Position der Dichtungseinheit (3) in der Umfangsrichtung ändert.

2. Drehdichtungsmechanismus nach Anspruch 1, wobei die Dichtungseinheit (3) mit einem schmierenden Fettkanal (15) ausgestattet ist.

3. Drehdichtungsmechanismus nach einem der Ansprüche 1 bis 2, wobei ein Teil des festen Körpers (1) ein Gehäuse (12) ist, eine Durchmesserabmessung des Gehäuses (12) zwischen einer Durchmesserabmessung des festen Körpers (1) und einer Durchmesserabmessung des drehenden Körpers (2) ist, und sich eine Staubblockierende Wärmeisolationswand (14) vom Typ Labyrinth zwischen dem Gehäuse (12) und dem drehenden Körper (2) befindet.

4. Drehdichtungsmechanismus nach einem der Ansprüche 1 bis 2, wobei ein Teil eines festen Körpers (1) ein Gehäuse (12) ist, eine Durchmesserabmessung des Gehäuses (12) zwischen einer Durchmesserabmessung des festen Körpers (1) und einer Durchmesserabmessung des drehenden Körpers (2) ist, und sich eine Temperatursenkungsbox (13) zwischen dem Gehäuse (12) und dem drehenden Körper (2) befindet.

5. Drehdichtungsmechanismus nach einem der Ansprüche 1 bis 4, wobei sich ein Reifen (16) zwischen der Dichtungseinheit (3) und dem drehenden Körper (2) befindet.

6. Drehdichtungsmechanismus nach Anspruch 5, wobei sich eine Spiralklinge (21) zwischen dem drehenden Körper (2) und dem Reifen (16) befindet.

## Revendications

1. Mécanisme de joint d'étanchéité rotatif pour un four rotatif, disposé entre un corps fixe (1) et un corps rotatif (2) et comprenant :
un ensemble d'étanchéité (3) disposé sur une circonférence du corps rotatif (2) et raccordé, en rotation, au corps rotatif (2), dans lequel l'ensemble d'étanchéité (3) comprend un corps de bâti d'étanchéité (7) et le corps de bâti d'étanchéité (7) est doté, à l'intérieur de ce dernier, d'une bague d'étanchéité (9), d'une bague de positionnement (8) pour une bague d'étanchéité (9) et d'un presse-étoupe (10) pour une bague d'étanchéité (9) ;
un corps de raccordement flexible (4) raccordé avec l'ensemble d'étanchéité (3) et le corps fixe (1) ;
un composant de coopération de limitation (5) disposé sur l'ensemble d'étanchéité (3) ; et
des composants de support suiveurs (11) disposés sur l'ensemble d'étanchéité (3),
**caractérisé en ce que** les composants de support suiveurs (11) définissent une coaxialité entre l'ensemble d'étanchéité (3) et le corps rotatif (2), les composants de support suiveurs (11) sont des rouleaux de support, des bagues de support ou des blocs de support respectivement sur un côté du corps de bâti d'étanchéité (7) et d'un côté du presse-étoupe (10) pour la bague d'étanchéité, dans lequel pendant la rotation du corps rotatif (2), l'ensemble d'étanchéité (3) se déplace par rapport au corps rotatif (2) pour être radialement déplacé vers le haut et vers le bas et vers la gauche et vers la droite avec le corps rotatif (2), et pendant la rotation du corps rotatif (2), l'élément d'étanchéité (3) est soumis à la friction du corps rotatif (2), une force appliquée dans une direction circonférentielle est déchargée sur le corps de raccordement flexible (4), et une position de l'ensemble d'étanchéité (3) dans la direction circonférentielle, change.

2. Mécanisme de joint d'étanchéité rotatif selon la revendication 1, dans lequel l'ensemble d'étanchéité (3) est prévu avec un canal de graisse lubrifiante (15).

3. Mécanisme de joint d'étanchéité rotatif selon l'une quelconque des revendications 1 à 2, dans lequel une partie du corps fixe (1) est une coque (12), une dimension de diamètre de la coque (12) est comprise entre une dimension de diamètre du corps fixe (1) et une dimension de diamètre du corps rotatif (2), et une paroi thermiquement isolante antipoussière (14) de type à labyrinthe est disposée entre la coque (12) et le corps rotatif (2).

4. Mécanisme de joint d'étanchéité rotatif selon l'une quelconque des revendications 1 à 2, dans lequel une partie du corps fixe (1) est une coque (12), une dimension de diamètre de la coque (12) est comprise entre une dimension de diamètre du corps fixe (1) et une dimension de diamètre du corps rotatif (2), et une boîte d'abaissement de température (13) est disposée entre la coque (12) et le corps rotatif (2).

5. Mécanisme de joint d'étanchéité rotatif selon l'une quelconque des revendications 1 à 4, dans lequel un bandage (16) est disposé entre l'ensemble d'étanchéité (3) et le corps rotatif (2).

6. Mécanisme de joint d'étanchéité rotatif selon la revendication 5, dans lequel une aube en spirale (21) est disposée entre le corps rotatif (2) et le bandage (16).
